# NEW EUROPEAN PATENT SPECIFICATION

(11) **EP 3 898 857 B2**
(45) Date of publication and mention of the opposition decision: **14.01.2026**
(45) Mention of the grant of the patent: 19.10.2022
(21) Application number: 19816362.8
(22) Date of filing: 12.12.2019
(51) Int. Cl.: C09D 167/00

(54) **COMPOSITION FOR APPLYING A MULTILAYER COATING ON A SUBSTRATE**
ZUSAMMENSETZUNG ZUM AUFBRINGEN EINER MEHRSCHICHTIGEN BESCHICHTUNG AUF EIN SUBSTRAT
COMPOSITION POUR L'APPLICATION D'UN REVÊTEMENT MULTICOUCHE SUR UN SUBSTRAT

(30) Priority: 21.12.2018 EP 18215061
(43) Date of publication of application: 27.10.2021
(73) Proprietor: ACTEGA Rhenania GmbH, 41516 Grevenbroich (DE)
(72) Inventor: NOTHERS, Björn, 46483 Wesel (DE); KELLERS, Simon, 46483 Wesel (DE); PIEL, Ralf, 46483 Wesel (DE)
(74) Representative: Strych, Sebastian
(86) International application number: PCT/EP2019/084840
(87) International publication number: WO 2020/126802

(56) References cited:
- EP-A1- 2 959 981
- EP-A1- 2 959 981
- WO-A1-2004/013240
- JP-A- H1 180 616
- US-A- 5 087 286
- US-A1- 2005 014 012

## Description

The present invention relates to a method for applying at least two coating layers on a substrate, an intermediate industrial product and a product or element of a manufactured article.

Metal or metal alloy foil is widely used for a variety of applications, for example for packaging of human food or animal food (pet food), packaging of pharmaceuticals, cosmetics packaging and/or for beverage containers or portion packs. The substrates used for such packaging, such as wrappers, interliners, lidding foils, blister packs, monobloc packaging, such as tubes or bottles, containers or portion packs are often coated, wherein a plane, coil or sheet of the substrate, for example, steel, aluminum or an aluminum alloy is coated with a suitable composition, and cured. The coated substrate can then either be formed into a beverage container or a portion pack or be used as a film directly.

In WO2012/167889 a process is described for preparing an aluminum or aluminum alloy foil with a stove lacquer on one side of the foil. However, such stoving lacquers are not suitable for a multilayer coating especially not for multicolor coating, since a lacquer layer needs to be fully cured (stoved) prior to the application of a next lacquer layer. This makes this a lengthy and energy consuming process. Consequently, the resulting multilayer coated products are not economically attractive. It should be mentioned that there are further coating types, e.g. described in EP 2 959 981, US 8,765,241 and EP 3 318 337 which are not so suitable in this connection.

In WO2007/137974 portion packs are described that are especially suitable for use as a coffee capsule. These coffee capsules need to be fluid-tight and able to withstand high pressure. Preferably, such portion packaging for coffee are produced from aluminum or aluminum alloy. These packages need as an essential quality requirement a mechanical stable, food safe and also attractive looking multilayer coating. However, there is a high price pressure in the relevant market so that expensive coating solutions are not compatible.

EP2959981 discloses a coating system for food containers comprising a polyester (co)polymer.

Summarizing, there is currently a need for (multi)colored portion packs or beverage containers which are economical attractive, food safe, coated in a mechanical and chemical stable way and having an attractive appearance. Such high quality products which are multi colored cannot be economically produced with the processes that are known in the art.

Thus, the object of the present invention is to provide an economical technical solution for producing such colored packaging material which fulfills the above mentioned quality requirements. Said technical solution should include the needed technical means, especially the corresponding coating composition and the production process in which the coating composition is used.

Herein disclosed is a solvent borne coating composition comprising:
from 15 - 40 wt.% of a polyester resin,
from 5 - 15 wt.% of a guanamine formaldehyde resin having no polyester groups,
from 22 - 72 wt.% solvents with an atmospheric pressure boiling point of 50 - 98 °C and a curing catalyst
wherein the wt.% is relative to the total weight of the composition.

This coating composition herein disclosedis highly suitable in a process for the preparation of colored packaging. According to the present invention this process is provided by a method for applying at least two coating layers on a substrate, characterized in that the following steps are included
step 1: a first layer of a coating composition comprising:
   i) from 15 - 40 wt.% of a polyester resin,
   ii) from 5 - 15 wt.% of a guanamine formaldehyde resin having no polyester groups,
   iii) from 22 - 72 wt.% solvents with an atmospheric pressure boiling point of 50 - 98 °C and
   iv) a curing catalyst
      wherein the wt.% is relative to the total weight of the composition and
   v) a pigment
   is applied to the substrate,
step 2: the thus coated substrate is heated to a peak metal temperature (PMT) of at most 100°C,
step 3: after step 2 a second layer of a coating composition comprising:
   i) from 15 - 40 wt.% of a polyester resin,
   ii) from 5 - 15 wt.% of a guanamine formaldehyde resin having no polyester groups,
   iii) from 22 - 72 wt.% solvents with an atmospheric pressure boiling point of 50 - 98 °C and
   iv) a curing catalyst
   wherein the wt.% is relative to the total weight of the composition
   is applied onto the first layer of the substrate,
step 4: after step 3 the coated substrate is heated to a peak metal temperature of at least 200°C.

"Peak metal temperature" (PMT) refers to a temperature of the relevant substrate, in the current patent application to the temperature of the substrate which is normally provided by a metal or metal alloy foil. In general, the peak metal temperature is lower than the temperature of the oven that is used to heat the metal and depends, i.a., on the residence time in the oven.

Before further specifying this method the coating composition disclosed herein should be described in more detail.

The polyester resin contains at least two ester groups.

The guanamine formaldehyde resin having no polyester groups (might contain at least one ester group) is a guanamine (2,4-diamino-6-R¹-1,3,5-triazine) formaldehyde resin in which R¹ is represented by a hydrocarbon group.

The solvents with an atmospheric pressure boiling point of 50 - 98 °C (atmospheric pressure boiling point) are suitable solvents for polyester resins and guanamine formaldehyde resins. Said solvents might be provided by a single solvent or by species of a solvent mixture having an individual boiling point of 50 - 98 °C.

The composition herein disclosed generally contains only food safe ingredients and normally shows a good adhesion when applied onto a substrate. Typically, the coating composition herein disclosed is also usable as a paint, varnish or ink.

The composition herein disclosed is a solvent borne composition. As also described above relevant solvents might be provided by a single solvent or by a solvent mixture which normally shows a corresponding boiling range. The composition might also contain solvents with an individual boiling point of lower than 50 °C or higher than 98 °C. However, this is not optimal because one the one hand the provision of a corresponding boiling range of about 50 °C - about 98 °C of the relevant solvent mixture is preferred. On the other hand solvents with an individual boiling point below 50 °C are difficult to handle and often environmentally problematical. Solvents with an individual boiling point of higher 98 °C are generally not preferred if the coating composition is used in the method of the present invention which is also used in order to provide a tack-free intermediate product in an economical way. In this connection it might be beneficial if the solvent borne coating composition disclosed herein contains less than 8 wt.% solvents with an (individual) atmospheric pressure boiling point of > 120 °C.

Particular good results were found in the process described above when the solvent is methyl ethyl ketone (boiling point 80 °C) and/ or ethyl acetate (boiling point 77 °C) or a mixture of solvents comprising methyl ethyl ketone and/ or ethyl acetate. The use of methyl ethyl ketone and or ethyl acetate as a solvent or a mixture containing at least one of these solvents is in particular beneficial to provide for compositions that can be tack free at a peak metal temperature of at most 100°C. Other solvents that can be present in a mixture with methyl ethyl ketone and/ or methyl ethyl acetate include n-butanol (boiling point 118 °C).

Any suitable polyester resin might be used. Species having a relative high amount of (terminal) hydroxyl groups and a relative small amount of (terminal) carboxyl groups are generally beneficial. In conformity with this fact preferably at least 75 wt.% of the polyester resin has an acid value of 0.5 - 10 mg KOH/ g and a hydroxyl value of 0.5 - 100 mg KOH/ g.

Typically, at least 75 wt.% of the polyester resin is represented by a linear saturated polyester resin having a Tg below 90°C. In a further embodiment, the polyester resin has a Tg below 80°C. The glass transition temperature of the material (Tg) is measured by using differential scanning calorimetry (DSC). In this measurement the energy released when heating a sample is measured. The results of this measurement can be used to determine Tg. This procedure is well known to the skilled person. The Tg values mentioned in this document were measured using a heating rate of 20 K/min. Before each measurement, a sample is heated for a short period of time to a temperature just above the (expected) Tg.

Typically, the polyester resin (normally 100 wt.% of the polyester resin) has no heterocyclic amine groups (in a heterocyclic amine group the N atom of the amine group is a ring atom of the heterocycle).

Polyester resins that can be used in the composition disclosed herein are food compatible linear saturated polyester resins having a Tg in the range from 65 to 85 °C, having a relative high amount of hydroxyl groups and a relative low amount of carboxyl groups.

The composition disclosed herein further comprises a guanamine (2,4-diamino-6-R1-1,3,5-triazine) formaldehyde resin in which R1 is represented by a hydrocarbon group. Preferably, R1 is represented by phenyl (benzoguanamin = 2,4-diamino-6-phenyl-1,3,5-triazine), by methyl (acetoguanamin = 2,4-diamino-6-methyl-1,3,5-triazine) or by nonyl (caprinoguanamin = 2,4-diamino-6-nonyl-1,3,5-triazine). Most preferred is a benzoguanamine formaldehyde resin. Relevant guanamine formaldehyde resin of the present invention does not contain polyester groups (maximal one ester group).

In a preferred embodiment of the invention at least 75 wt.% of the guanamine formaldehyde resin is represented by an alkylated benzoguanamine formaldehyde resin.

Typically said alkylated benzoguanamine formaldehyde resin contains n-butylated benzoguanamine formaldehyde resin.

Benzoguanamine resins that can be used in the composition disclosed herein are commercially available and include Komelol BG resins (n-butylated benzoguanamine formaldehyde resin), Melcross 86 (ex. P&ID co Ltd), ITAMIN BG resins (ex Reda Chemicals) and Cymel^{®} benzoguanamine resins (ex Allnex).

Preferably, the curing catalyst comprises a sulfonic acid containing compound. According to a typical example said catalyst is represented by a dodecylbenzene sulfonic acid compound. Sulfonic acid containing compounds that can be used as catalyst in the composition of the current invention are commercially available and include Sulfonax ^{®} (ex Kao Chemicals) and Nacure 5076 (ex King Industries). The amount of the curing catalyst in the composition should be sufficient in order to provide an efficient curing. However, it is routine for a skilled person to determine a suitable amount of catalyst.

The solvent borne coating composition comprises at least 8 wt.% pigments. In such a case the coating composition is not used as a clear coat but as a color providing means.

In addition to the ingredients described above (solvent, polyester resin, benzoguanamine formaldehyde resin, catalyst, pigment) such composition may comprise further components such as one or more crosslinkers, further catalysts, other binder resins, fillers, rheology modifiers, surfactants, other (co)solvents, or other additives commonly used in paint, varnish or ink composition.

For the composition to be used in various applications in the food industry, it is advantageous when all ingredients that are present in the composition are safe for direct food contact. This means that such ingredients need to be compliant with or described in EU No 10/2011 or US 21 CFR 174 - 21 CFR 190. In particular, the coating compositions should be FDA-compliant according to 21 CFR 175.300 or 21 CFR 178.3297.

If the composition is used for other packaging applications, for example in the packaging of pharmaceuticals or cosmetics, the ingredients present in the composition should be compliant with the requirements for these specific packaging applications.

The above mentioned method according to the present invention in which the composition disclosed herein is used is described in more detail below.

In step 1 a first layer of a pigment containing coating composition disclosed herein is applied to a substrate. This first layer normally contains at least 8 wt.% pigments. The gloss of the final product might be enhanced if relatively small pigment particles are used. Typically the substrate is a metal foil or a metal alloy foil. The metal or metal alloy can be selected from the group consisting of aluminum or aluminum alloy, steel or steel alloy, thin plated steel, or thin plated steel alloy, and stainless steel. The metal or metal alloy foil that is used can be a thin layer of a metal or a metal alloy or a composite structure of a thin layer of a metal or a metal alloy and a thin layer of another material. For example, it can be a composite structure of a thin layer of a metal or a metal alloy and a thin layer of a polymer material, where the thin polymer layer is laminated onto the thin layer of a metal or a metal alloy. The metal or metal alloy that is in the foil that is used in the process according to the present invention can be either aluminum, steel, thin plated steel and stainless steel or any alloy thereof. It also includes composite materials containing a metal foil. Prior to the application of a coating composition comprising a pigment (prior step 1), a primer might be applied to the foil, for example, to improve the adhesion to the foil. Such primer might have the same or a different composition compared with the composition of the pigment comprising coating. Normally, the primer does not comprise a pigment. It is in particular advantageous when such primer comprises a binder resin that is the same as the binder resin in the pigmented composition, in particular to improve the compatibility and the adhesion between the different layers. However, the use of such a primer is not necessary and not preferred concerning the most practical applications.

In step 2 the thus coated substrate is heated to a peak metal temperature (PMT) of at most 100°C.

Step 2 is important in order to provide an intermediate product that can be rapidly reprocessed. This means that on the one hand a rapid overcoating (normally by step 3) with another coating layer is possible. Especially in a printing machine it is highly economical (time and energy saving) if no extended drying step (especially no intensive heating step) is necessary before applying a further coating layer. It should be pointed out that step 2 is a good preparation for the next (over)coating step because an effective adhesion of the next coating layer (provided by step 3) is achieved. On the other hand step 2 allows a mechanical pretreatment especially a coiling without damaging the (pre)coated substrate. The peak metal temperature in step 2 should be high enough to obtain a tack-free coated substrate and at the same time should be low enough to enable step 1 to be done in an environment that allows for the application of at least one colored coating layer.

"Tack-free" in relation to a substrate means that the substrate is in a sufficiently robust state to resist damage by contact or handling or the settling of dirt. To test the tack-free time, the time can be determined by briefly pressing a polyethylene film against the surface of the substrate and to check for any adhering material when the film is removed. In such test a small weight can be used to provide a reproducible contact pressure.

In one embodiment of the method the peak metal temperature in step 2 is at most 90°C.

Typically after step 2 but also after step 3 the substrate might be cooled and rolled.

To allow for the rolling of the coated substrate and unrolling in a next processing step without any detriment to the coated layers, such substrate should have a low tack or be tack free. For such rolling it is not necessary for the coating layers to be fully cured and hardened, but it was found that it is sufficient for the coated substrate to have a low tack or be tack-free, such that any adhesion between the subsequent layers in a roll is so low that no damage is caused to the coating layer by the rolling or unrolling of the coated foil.

Rolling the substrate can be advantageous in particular in an embodiment where at least step 1 and step 2 are performed in a printing apparatus and the further processing of the coated substrate includes the mechanical processing of the coated substrate, for example when it is divided in smaller pieces of a coated foil and/or when the coated foil is formed, for example, in a deep drawing process.

In step 3, which is performed after step 2, a second layer of a coating composition disclosed herein is applied onto the first layer of the substrate.

In one embodiment of the present invention this second layer is provided by a clear coat. Such a clear coat normally enhances the necessary mechanical abilities of the coating system like the elasticity. In this connection it is often advantageous if pigmented coating layers and clear coat layers alternate like in a sandwich structure. It is in particular advantageous when such clear coat comprises a binder resin that is the same as the binder resin in the pigmented composition, in particular to improve the compatibility and the adhesion between the different layers. To improve the further processing of the substrate, it might be advantageous to include a surface active component such as a wax compound in the clear coat composition. However, as a further embodiment of the invention this second layer might also contain pigments.

Advantageously, directly after step 3 (and before step 4) a further step which is according to step 2 is performed. This is beneficial concerning the preparation for a possible further overcoat and also in connection with a possible coiling of the non-finally cured substrate. Typically after step 3 the thus coated substrate is heated to a peak metal temperature (PMT) of at most 100°C and thereafter but before step 4 the coated substrate is further mechanically treated by coiling.

However, it might be advantageous to apply more than two wholly or partially colored coating layers. Often, after step 3 but before step 4 at least one further pigment containing coating composition disclosed herein is applied onto the coated substrate and thereafter but before step 4 the thus coated substrate is heated to a peak metal temperature (PMT) of at most 100°C. The method of the present invention might be advantageously performed in a printing apparatus, allowing for the application of a multitude of colored coating layers in consecutive steps. Using a printing apparatus furthermore allows for the application of very detailed colored images on the substrate. When a printing machine is used for steps 1 - 3, the pigmented coating composition is sometimes referred to as pigmented lacquer or printing ink.

The invention also refers to the intermediate industrial product which is producible by a method which is described above with the proviso that said method stops after step 3 but before step 4 by heating the coated substrate to a peak metal temperature (PMT) of at most 100°C.

Preferably said intermediate industrial product is provided on a coil.

In step 4, which is performed after step 3, the coated substrate is heated to a peak metal temperature of at least 200°C. Step 4 which is normally not performed in a printing machine but in a corresponding oven can be deemed as to be the final curing step. In one embodiment the peak metal temperature in step 4 is at least 210°C. In general, a higher peak metal temperature will allow for a faster compete cure of the various coating layers that were applied to the substrate. After step 4 the relevant coating system is fully cured and has received its chemical and mechanical stability. A coated substrate obtained after step 4 has a high flexibility and can be subjected to various types of mechanical handling. It was found that such coated substrate is in particular suited for cutting, stamping, molding, or deep drawing of the coated substrate, since the coating layer on the substrate shows a high flexibility and a good adhesion. A coated substrate which is mechanically processed after step 4 shows an equal coloration over the complete part of the drawn substrate. Summarizing, the method according to the present invention provides an economical multilayer coating of high quality. Said high quality is especially based on the mechanical abilities like the elasticity and the attractive appearance. One aspect concerning the appearance is the high gloss and the equal coloration of the final product. Furthermore, the method is flexible concerning its practical use because all kind of requested colors or color mixtures are realizable. Furthermore, the method is environmental attractive because food compatible coatings are used.

The invention further provides a product or an element of a manufactured article which is producible by a method as described above.

Preferably, said element of a manufactured article forms an assembly part of a brewing container which has been mechanically treated by deep drawing. Such a brewing container is typically based on a metal or metal alloy capsule. Such metal or metal alloy capsule is advantageously used in combination with a metal or metal alloy lidding foil to form a disposable brewing container. For use as a disposable brewing container, the metal or metal alloy is advantageously aluminum or an aluminum alloy. In such disposable brewing container the capsule and the lidding foil are connected by means of a heat-seal lacquer.

Summarizing, a brewing container produced according to the present invention fulfills both conditions, the needed economical and the requested quality criteria of the corresponding market.

Below the present invention is described in more detail by using examples.

### EXAMPLES

The following compositions were prepared by mixing the ingredients mentioned in table 1 at room temperature until a homogeneous coating composition was obtained.

**Table 1: Ingredients of the compositions in parts by weight**

| Ingredient | Example | | | | | |
|---|---|---|---|---|---|---|
| | 1 | 2 | 3 | 4 | 5 | 6 |
| Resin 1¹ | 35.2 | 21.4 | 28.6 | 27.8 | 27.8 | 17.1 |
| Resin 2 ² | 10.0 | 10.0 | 10.0 | 10.0 | 10.0 | 10.0 |
| MEK ³ | 54.8 | 36.0 | 46.8 | 45.8 | 45.8 | 29.6 |
| DDBSA ⁴ | 0.5 | 0.5 | 0.5 | 0.5 | 0.5 | 0.5 |
| White pigment(s)⁵ | | 30.0 | 1.0 | 10 | 2.0 | 43.0 |
| Yellow pigment ⁶ | | 1.8 | | | 0.2 | |
| Orange pigment ⁷ | | 0.6 | 0.2 | | | |
| Red pigment ⁸ | | | 13.1 | | 1.8 | |
| Blue pigment ⁹ | | | | 6.1 | | |
| Green pigment ¹⁰ | | | | | 1.1 | |
| Black pigment ¹¹ | | | | | 10.0 | |
| Rheology agent ¹² | | 0.3 | 0.3 | 0.3 | 0.3 | 0.3 |
| Color | Clear | Yellow | Red | Blue | Black | White |

| | | | | | | |
|---|---|---|---|---|---|---|
| ¹) a linear saturated polyester resin with a Mw of 18000, a Tg of 70°C, an OH value of 6 mg KOH/g and an acid value of 2mg KOH/g. ²) a n-butylated benzoguanamine resin ³) methyl ether ketone solvent ⁴) Dodecylbenzene sulfonic acid ⁵) Titanium dioxide and/or barium sulfate ⁶) PY 93, and/or PY 95, and / or PY 180, and / or PY 110 ⁷) C.I. Pigment orange 64 ⁸) Pigment red 101 ⁹) Phthalocyanin blue ¹⁰) Phthalocyanin green ¹¹) C.I. Pigment black 11 ¹²) Hydrophilic fumed silica | | | | | | |

### Example 7 (not according to the invention)

The compositions above were applied in various layers in a Rotomec printing machine operating at a speed of 100m/min to an 8011 aluminum foil type. The compositions were each applied applied at an amount of 2 g/m2. After application of the composition(s) the foil was heated to a peak metal temperature of 90°C for 5 sec. and rolled at 60°C. The coil was unrolled and heated to a peak metal temperature of 216°C in an oven. Thereafter a portion packs were produced by deep drawing the coated aluminum foils in a standard deep drawing press. All portion packs showed an equal coloration over the complete part of the drawn substrate.

## Claims

1. A method for applying at least two coating layers on a substrate, **characterized in that** the following steps are included
step 1: a first layer of a coating composition comprising:
i) from 15 - 40 wt.% of a polyester resin,
ii) from 5 - 15 wt.% of a guanamine formaldehyde resin having no polyester groups,
iii) from 22 - 72 wt.% solvents with an atmospheric pressure boiling point of 50 - 98 °C,
iv) a curing catalyst,
wherein the wt.% is relative to the total weight of the composition and
v) a pigment
is applied to the substrate,
step 2: the thus coated substrate is heated to a peak metal temperature (PMT) of at most 100°C,
step 3: after step 2 a second layer of a coating composition comprising:
i) from 15 - 40 wt.% of a polyester resin,
ii) from 5 - 15 wt.% of a guanamine formaldehyde resin having no polyester groups,
iii) from 22 - 72 wt.% solvents with an atmospheric pressure boiling point of 50 - 98 °C,
iv) a curing catalyst,
wherein the wt.% is relative to the total weight of the composition is applied onto the first layer of the substrate,
step 4: after step 3 the coated substrate is heated to a peak metal temperature of at least 200°C.

2. A method according to claim 1, wherein the coating composition comprising less than 8 wt.% solvents with an atmospheric pressure boiling point of > 120 °C.

3. A method according to claims 1 - 2, wherein the coating composition is **characterized in that** at least 75 wt.% of the polyester resin has an acid value of 0.5 - 10 mg KOH/ g and a hydroxyl value of 0.5 - 100 mg KOH/ g.

4. A method according to claims 1 - 3, wherein the coating composition is **characterized in that** at least 75 wt.% of the polyester resin is represented by a linear saturated polyester resin having a Tg below 90°C, where the Tg is measured by using differential scanning calorimetry (DSC).

5. A method according to claims 1 - 4, wherein the coating composition is **characterized in that** at least 75 wt.% of the guanamine formaldehyde resin is represented by an alkylated benzoguanamine formaldehyde resin.

6. A method according to claims 1 - 5, **characterized in that** in the coating composition the curing catalyst comprises a sulfonic acid containing compound.

7. A method according to claims 1 - 6, **characterized in that** the composition further comprises at least 8 wt.% pigments.

8. A method according to claims 1 - 7, **characterized in that** the substrate is a metal foil or a metal alloy foil.

9. A method according to claims 1 - 8, **characterized in** step 3 the second layer is provided by a clear coat.

10. A method according to one of the claims 1 - 9, **characterized in that** after step 3 the thus coated substrate is heated to a peak metal temperature (PMT) of at most 100°C and thereafter but before step 4 the coated substrate is further mechanically treated by coiling.

11. A method according to one of the claims 1 - 10, **characterized in that** after step 3 but before step 4 at least one further pigment containing coating composition as defined in one of claims 1 - 7 is applied onto the coated substrate and thereafter but before step 4 the thus coated substrate is heated to a peak metal temperature (PMT) of at most 100°C.

12. Intermediate industrial product which is producible by a process which is according to the method of the claims 1 - 11 with the proviso that said method stops after step 3 but before step 4 by heating the coated substrate to a peak metal temperature (PMT) of at most 100°C.

13. Intermediate industrial product according to claim 12 which is provided by a coil.

14. Product or element of a manufactured article which is producible by a method according to one of the claims 1 - 11.

15. Element of a manufactured article according to claim 14 which forms an assembly part of a brewing container which has been mechanically treated by deep drawing.

## Patentansprüche

1. Verfahren zum Aufbringen von mindestens zwei Beschichtungsschichten auf ein Substrat, **dadurch gekennzeichnet, dass** die folgenden Schritte enthalten sind:
Schritt 1: eine erste Schicht einer Beschichtungszusammensetzung umfassend:
i) 15 - 40 Gew.-% eines Polyesterharzes,
ii) 5 - 15 Gew.-% eines Guanamin-Formaldehyd-Harzes ohne Polyestergruppen,
iii) 22 - 72 Gew-% Lösungsmittel mit einem Siedepunkt bei Normaldruck von 50 - 98°C,
iv) einen Härtungskatalysator,
wobei sich die Gew.-% auf das Gesamtgewicht der Zusammensetzung beziehen, und
v) ein Pigment
wird auf das Substrat aufgebracht,
Schritt 2: das so beschichtete Substrat wird auf eine Spitzenmetalltemperatur (PMT) von höchstens 100°C erhitzt,
Schritt 3: nach Schritt 2 wird eine zweite Schicht einer Beschichtungszusammensetzung umfassend:
i) 15 - 40 Gew.-% eines Polyesterharzes,
ii) 5 - 15 Gew.-% eines Guanamin-Formaldehyd-Harzes ohne Polyestergruppen,
iii) 22 - 72 Gew.-% Lösungsmittel mit einem Siedepunkt bei Normaldruck von 50 - 98°C,
iv) einen Härtungskatalysator,
wobei sich die Gew.-% auf das Gesamtgewicht der Zusammensetzung beziehen, auf die erste Schicht des Substrats aufgebracht,
Schritt 4: nach Schritt 3 wird das beschichtete Substrat auf eine Spitzenmetalltemperatur von mindestens 200°C erhitzt.

2. Verfahren nach Anspruch 1, wobei die Beschichtungszusammensetzung weniger als 8 Gew.-% Lösungsmittel mit einem Siedepunkt bei Normaldruck von > 120°C umfasst.

3. Verfahren nach Anspruch 1 - 2, wobei die Beschichtungszusammensetzung **dadurch gekennzeichnet ist, dass** mindestens 75 Gew.-% des Polyesterharzes eine Säurezahl von 0,5 - 10 mg KOH/ g und eine Hydroxylzahl von 0,5 - 100 mg KOH/ g aufweisen.

4. Verfahren nach Anspruch 1 - 3, wobei die Beschichtungszusammensetzung **dadurch gekennzeichnet ist, dass** mindestens 75 Gew.-% des Polyesterharzes durch ein lineares gesättigtes Polyesterharz mit einer Tg unter 90°C repräsentiert werden, wobei die Tg mittels Differentialkalorimetrie (DSC) gemessen wird.

5. Verfahren nach Anspruch 1 - 4, wobei die Beschichtungszusammensetzung **dadurch gekennzeichnet ist, dass** mindestens 75 Gew.-% des Guanamin-Formaldehyd-Harzes durch ein alkyliertes Benzoguanamin-Formaldehyd repräsentiert werden.

6. Verfahren nach Anspruch 1 - 5, **dadurch gekennzeichnet, dass** in der Beschichtungszusammensetzung der Härtungskatalysator eine sulfonsäurehaltige Verbindung umfasst.

7. Verfahren nach Anspruch 1 - 6, **dadurch gekennzeichnet, dass** die Zusammensetzung ferner mindestens 8 Gew.-% Pigmente umfasst.

8. Verfahren nach Anspruch 1 - 7, **dadurch gekennzeichnet, dass** es sich bei dem Substrat um eine Metallfolie oder eine Metalllegierungsfolie handelt.

9. Verfahren nach Anspruch 1 - 8, **dadurch gekennzeichnet, dass** in Schritt 3 die zweite Schicht durch einen Klarlack bereitgestellt wird.

10. Verfahren nach einem der Ansprüche 1 - 9, **dadurch gekennzeichnet, dass** nach Schritt 3 das so beschichtete Substrat auf eine Spitzenmetalltemperatur (PMT) von höchstens 100°C erhitzt und danach, aber vor Schritt 4, das beschichtete Substrat ferner durch Aufspulen mechanisch behandelt wird.

11. Verfahren nach einem der Ansprüche 1 - 10, **dadurch gekennzeichnet, dass** nach Schritt 3, aber vor Schritt 4, mindestens eine weitere pigmenthaltige Beschichtungszusammensetzung, wie in einem der Ansprüche 1 - 7 definiert, auf das beschichtete Substrat aufgebracht wird und danach, aber vor Schritt 4, das so beschichtete Substrat auf eine Spitzenmetalltemperatur (PMT) von höchstens 100°C erhitzt wird.

12. Technisches Halbzeug, das durch einen Prozess herstellbar ist, der dem Verfahren der Ansprüche 1 - 11 entspricht, mit der Maßgabe, dass das Verfahren nach Schritt 3, aber vor Schritt 4, durch Erhitzen des beschichteten Substrats auf eine Spitzenmetalltemperatur (PMT) von höchstens 100°C endet.

13. Technisches Halbzeug nach Anspruch 12, das durch eine Spule bereitgestellt wird.

14. Produkt oder Element eines Erzeugnisses, das durch ein Verfahren nach einem der Ansprüche 1 - 11 herstellbar ist.

15. Element eines Erzeugnisses nach Anspruch 14, das ein Bauteil eines durch Tiefziehen mechanisch behandelten Braubehälters bildet.

## Revendications

1. Procédé pour l'application d'au moins deux couches de revêtement sur un substrat, **caractérisé en ce que** les étapes suivantes sont comprises
étape 1 : une première couche d'une composition de revêtement comprenant :
i) de 15 à 40% en poids d'une résine polyester,
ii) de 5 à 15% en poids d'une résine guanamine-formaldéhyde ne comportant pas de groupes polyester,
iii) de 22 à 72 % en poids de solvants ayant un point d'ébullition à la pression atmosphérique compris entre 50 et 98°C,
iv) un catalyseur de durcissement,
dans lequel le pourcentage en poids est relatif au poids total de la composition et
vi) un pigment
est appliquée sur le substrat,
étape 2 : le substrat ainsi revêtu est chauffé à une température de pointe du métal (PMT) d'au plus 100°C,
étape 3 : après l'étape 2, une deuxième couche d'une composition de revêtement comprenant :
i) de 15 à 40% en poids d'une résine polyester,
ii) de 5 à 15% en poids d'une résine guanamine-formaldéhyde ne comportant pas de groupes polyester,
iii) de 22 à 72% en poids de solvants ayant un point d'ébullition à la pression atmosphérique compris entre 50 et 98°C,
iv) un catalyseur de durcissement,
dans lequel le pourcentage en poids est relatif au poids total de la composition est appliquée sur la première couche du substrat,
étape 4 : après l'étape 3, le substrat revêtu est chauffé à une température de pointe de métal d'au moins 200°C.

2. Procédé selon la revendication 1, dans lequel la composition de revêtement comprend moins de 8% en poids de solvants ayant un point d'ébullition à la pression atmosphérique supérieur à 120°C.

3. Procédé selon les revendications 1 à 2, dans lequel la composition de revêtement est **caractérisée en ce qu'**au moins 75% en poids de la résine polyester a un indice d'acide de 0,5 à 10 mg KOH/g et un indice d'hydroxyle de 0,5 à 100 mg KOH/g.

4. Procédé selon les revendications 1 à 3, dans lequel la composition de revêtement est **caractérisée en ce qu'**au moins 75% en poids de la résine polyester est représentée par une résine polyester saturée linéaire ayant une Tg inférieure à 90°C, la Tg étant mesurée par calorimétrie différentielle à balayage (DSC).

5. Procédé selon les revendications 1 à 4, dans lequel la composition de revêtement est **caractérisée en ce qu'**au moins 75 % en poids de la résine de guanamine-formaldéhyde est représentés par une résine de benzoguanamine-formaldéhyde alkylée.

6. Procédé selon les revendications 1 à 5, **caractérisé en ce que**, dans la composition de revêtement, le catalyseur de durcissement comprend un composé contenant un acide sulfonique.

7. Procédé selon les revendications 1 à 6, **caractérisé en ce que** la composition comprend en outre au moins 8% en poids de pigments.

8. Procédé selon les revendications 1 à 7, **caractérisé en ce que** le substrat est une feuille métallique ou une feuille d'alliage métallique.

9. Procédé selon les revendications 1 à 8, **caractérisé en ce que** dans l'étape 3, la deuxième couche est fournie par un revêtement transparent.

10. Procédé selon l'une des revendications 1 à 9, **caractérisé en ce qu'**après l'étape 3, le substrat ainsi revêtu est chauffé à une température de pointe du métal (PMT) d'au plus 100°C et ensuite, mais avant l'étape 4, le substrat revêtu est en outre traité mécaniquement par bobinage.

11. Procédé selon l'une des revendications 1 à 10, **caractérisé en ce qu'**après l'étape 3 mais avant l'étape 4, au moins une composition de revêtement contenant un pigment supplémentaire telle que définie dans l'une des revendications 1 à 7 est appliquée sur le substrat revêtu, et ensuite, mais avant l'étape 4, le substrat ainsi revêtu est chauffé à une température de pointe maximale (PMT) d'au plus 100 °C.

12. Produit industriel intermédiaire qui peut être produit par un processus qui est selon le procédé des revendications 1 à 11 à la condition que ledit procédé s'arrête après l'étape 3, mais avant l'étape 4, en chauffant le substrat revêtu jusqu'à une température de pointe du métal (PMT) d'au plus 100 °C.

13. Produit industriel intermédiaire selon la revendication 12, qui est fourni sous forme de bobine.

14. Produit ou élément d'un article fabriqué qui peut être produit par un procédé selon l'une des revendications 1 à 11.

15. Élément d'un article fabriqué selon la revendication 14 qui forme une pièce d'assemblage d'un récipient de brassage qui a été traité mécaniquement par emboutissage profond.
